Europäisches Patentamt

European Patent Office

Office européen des brevets

(11) Veröffentlichungsnummer: **0 500 007 A2**

# EUROPÄISCHE PATENTANMELDUNG

(21) Anmeldenummer: **92102595.3**

(22) Anmeldetag: **17.02.92**

(51) Int. Cl.5: **B09B 1/00**

(30) Priorität: **19.02.91 DE 4105102**
**05.03.91 DE 4107023**

(43) Veröffentlichungstag der Anmeldung:
**26.08.92 Patentblatt 92/35**

(84) Benannte Vertragsstaaten:
**AT DE ES**

(71) Anmelder: **HERHOF UMWELTTECHNIK GMBH**
**Riemannstrasse 1**
**W-6336 Solms-Niederbiel(DE)**

(72) Erfinder: **Der Erfinder hat auf seine Nennung**
**verzichtet**

(74) Vertreter: **Zinnecker, Armin, Dipl.-Ing.**
**Lorenz-Seidler-Gossel et al**
**Widenmayerstrasse 23**
**W-8000 München 22(DE)**

(54) **Verfahren zur Zwischenlagerung von Kunststoffabfällen.**

(57) Ein Verfahren dient zur Zwischenlagerung von Kunststoffabfällen. Um die Gefahr der Selbst- und Fremdentzündung zu vermindern und die Löschbarkeit im Brandfall zu verbessern, werden Kunststoffe mit Zuschlagstoffen niederen Brennwertes vermischt. Die verwendeten Zuschlagstoffe weisen vorzugsweise einen niedrigeren Brennwert auf als der abzulagernde Kunststoff.

EP 0 500 007 A2

Die Erfindung betrifft ein Verfahren zur Zwischenlagerung von Kunststoffabfällen.

Gemäß den Ergebnissen der bundesweiten Hausmüllanalyse sind im Hausmüll etwa 8 % Kunststoff enthalten. Repräsentative Untersuchungen zum Kunststoffanteil in gewerblichen Abfällen liegen derzeit noch nicht vor. Bekannt ist allerdings, daß in vielen Regionen das Verhältnis Hausmüll zu Gewerbeabfall etwa 1:1 beträgt.

Die Zusammensetzung der gewerblichen Abfälle ist in mehreren Einzeluntersuchungen auf Landkreisebene ermittelt worden. Die Ergebnisse zeigen, daß je nach Gewerbestruktur, der Kunststoffanteil bis zu 40 Gewichts-% ausmachen kann. Dementsprechend ist zu erwarten, daß auf Hausmülldeponien in vielen Fällen zwischen 20 und 30 Gewichts-% Kunststoffe mit abgelagert werden.

Die separate Erfassung sowie die Abtrennung von Kunststoffen aus Abfallgemischen entspricht dem Verwertungsgebot des Bundesgesetzgebers. In Anbetracht der derzeit schlechten Vermarkungslage muß ein Großteil separierter Kunststoffe allerdings wieder deponiert bzw. verbrannt werden, was keiner Verwertung im Sinne des Gesetzes entspricht.

Aus kunststofftechnischer Sicht kann erwartet werden, daß in 5 bis 10 Jahren die Kunststoffverwertung technologisch kein Problem mehr darstellen wird. Es ist deshalb wünschenswert, Kunststoffe bereits jetzt zu separieren, zwischenzulagern und später wieder nutzbar zu machen.

Die Zwischenlagerung von Kunststoffabfällen in langjährigen Wertstoffdepots in Form von geschütteten Haufwerken (Deponien) bzw. Ballendeponien ist technisch möglich. Probleme entstehen bei der Verdichtbarkeit der Kunststoffe sowie, bei Kunststoffballendeponien, in der Paßgenauigkeit einzelner Ballen zueinander, was eine schlechte Befahrbarkeit infolge von Spaltenbildung mit sich bringt. Die Hauptproblematik entsteht allerdings durch die hohe Brandgefahr infolge Selbst- bzw. Fremdentzündung sowie die Folgen derartiger Brände. Aufgrund des hohen Brennwertes und der leichten Entzündlichkeit ist ein schnelles Ausbreiten der Flammenfront zu erwarten. Die Löschmöglichkeiten reduzieren sich mit wachsender Größe der in Brand gesetzten Abschnitte. Die damit verbundenen Emissionen insbesondere in Form von Ruß, HCL, Dioxinen und CO überschreiten jedes zulässige Maß und stellen für die Umwelt eine unmittelbare Gefährdung dar. Darüber hinaus können durch tiefgreifende Brände Basisdichtungssysteme zerstört und somit die Grundwassergefährdung durch Sicker- oder Löschwasser erhöht werden.

Die im ersten Ansatz denkbare Vorgehensweise mit Parzellierung bzw. Zwischenabdeckung der Ablagerung durch inerte Zwischenwände bzw. -schichten verbessert den Schutz vor Selbst- oder Fremdentzündung abgedeckter Bereiche. Da Einbau und Abdeckung allerdings immer im Versatz erfolgen, ist eine Entzündung beim Einbau nicht auszuschließen. Die Funktion der Zwischenabdeckung bzw. Parzellenwand wird im Praxisbetrieb darüber hinaus dann aufgehoben, wenn deren isolierende Wirkung im Brandfall nicht ausreicht, um die Entzündung von Nachbarschichten bzw. Parzellen zu verhindern. Dies wird im Regelfall gegeben sein, wenn die Trennschichten lediglich 1 bis 2 m stark dimensioniert sind.

Aus der DE-OS 37 15 646 ist ein Verfahren zum Beseitigen, Aufarbeiten und Verwerten von Kunststoffabfällen bekannt, bei dem die Kunststoffabfälle mit Zuschlagstoffen vermischt und die Mischung weiter verarbeitet wird.

Aufgabe der Erfindung ist es daher, ein Verfahren zur Zwischenlagerung von Kunststoffabfällen vorzuschlagen, durch das die Gefahr der Selbst- und Fremdentzündung vermindert und die Löschbarkeit im Brandfall verbessert wird.

Erfindungsgemäß wird diese Aufgabe nach den kennzeichnenden Merkmalen des Anspruchs 1 dadurch gelöst, daß Kunststoffe mit Zuschlagstoffen niederen Brennwertes vermischt werden. Der Brennwert der Kunststoffe wird vor der Ablagerung derart gesenkt, daß die Gefahr der Selbst- und Fremdentzündung vermindert wird. Weiterhin wird die Löschbarkeit im Brandfall verbessert. Um den eingangs geschilderten Nachteilen zu begegnen, wird verfahrensmäßig ein völlig anderer Weg gewählt, der darin besteht, daß zur Verschlechterung des Entzündungs- und Brandverhaltens Kunststoffe zum Zweck der Zwischenlagerung mit Zuschlagstoffen niederen Brennwertes vermischt werden.

Vorteilhafte Weiterbildungen sind in den Unteransprüchen beschrieben.

Vorzugsweise weisen die verwendeten Zuschlagstoffe einen niedrigeren Brennwert (Heizwert) auf als der abzulagernde Kunststoff. Als Zuschlagstoffe kommen sowohl aufbereitete Reststoffe wie klassierter und/oder aufbereiteter Bauschutt, Stäube, Schlämme, Altglas, Glasbruch, Kompost oder ähnliche Materialien in Betracht als auch originäre Substanzen wie Sande, Gestein, Gesteinsmehle oder Erden (Böden) verschiedenster Provenienz.

Der Brennwert der Zuschlagstoffe und/oder der Kunststoffe kann durch die Zugabe von Wasser vermindert werden.

Die Schüttung des Zwischenlagers kann in Schichten, Schuttkegeln oder Ballen erfolgen. Das Zwischenlager kann parzellenweise aufgebaut werden. Die Parzellen können aus unterschiedlichen definierten Stoffgemischen bestehen. Die Parzellen des Zwischenlagers und/oder deren bzw. dessen Einzelschichten können durch wärmeisolierende Zwischenlager und/oder Wände voneinander getrennt werden. Die Basis und/oder Oberseite des Zwischenlagers kann durch entsprechende Dichtungselemente vor austretendem Sickerwasser und/oder eindringendem Niederschlagswasser geschützt werden.

Vorzugsweise werden die Kunststoffe erst nach entsprechender Voraufbereitung zum Beispiel durch Zerkleinerung, Sichtung, Homogenisierung, Handauslese mit einem Zuschlagstoff vermischt und abgelagert.

Besonders vorteilhaft ist die Verwendung von Zuschlagstoffen, die sich mechanisch leicht abtrennen lassen. Vorzugsweise werden solche Zuschlagstoffe verwendet, die für sich selbst ein vermarktungsfähiges Material darstellen wie z.B. bestimmte Gesteinsmehle oder Kompost. Entscheidend für die Auswahl der Zuschlagstoffe ist deren Verfügbarkeit, brandmindernde Eigenschaft, Mischbarkeit und Trennverhalten.

Das erfindungsgemäße Verfahren zeichnet sich dadurch aus, daß nach erfolgter Zwischenlagerung Kunststoffe und Zuschlagstoffe durch geeignete Verfahren wie Sieben, Sichten, Waschen oder sonstige Trennstufen separiert und gemäß ihren Eigenschaften vermarktet werden können.

Eine weitere vorteilhafte Weiterbildung ist dadurch gekennzeichnet, daß ein oder mehrere Kunststoffballen bzw. Ballen aus Kunststoff-Zuschlagstoff-Mischungen zur Ablagerung mit feuerhemmenden Folien, Vliesen oder Geweben ummantelt werden. Die Kunststoffe und/oder Kunststoff-Zuschlagstoff-Mischungen werden also zunächst zu Ballen gebündelt. Diese Ballen werden dann mit feuerhemmenden Folien, Vliesen oder Geweben ummantelt. Anschließend werden die ummantelten Ballen abgelagert.

Nach einer weiteren vorteilhaften Weiterbildung werden Kunststoff und feuerhemmende Schichten im Wechsel zueinander derart aufgebaut, daß zur Trennung voneinander Geotextilien, Folien, Vliese oder Gewebe verwendet werden.

Die Erfindung betrifft weiterhin ein Zwischenlager für Kunststoffabfälle, das dadurch gekennzeichnet ist, daß das Zwischenlager nach einem Verfahren nach einem der vorhergehenden Ansprüche hergestellt worden ist.

**Patentansprüche**

1.  Verfahren zur Zwischenlagerung von Kunststoffabfällen,

    **dadurch gekennzeichnet,**

    daß Kunststoffe mit Zuschlagstoffen niederen Brennwertes vermischt werden.

2.  Verfahren nach Anspruch 1, dadurch gekennzeichnet, daß die verwendeten Zuschlagstoffe einen niedrigeren Brennwert aufweisen als der abzulagernde Kunststoff.

3.  Verfahren nach Anspruch 1 oder 2, dadurch gekennzeichnet, daß die Zuschlagstoffe aus originären Substanzen wie Sande, Gestein, Gesteinsmehl oder Erden verschiedenster Provenienz und/oder aus aufbereiteten Reststoffen wie klassiertem und/oder aufbereitetem Bauschutt, Stäuben, Schlämmen, Altglas, Glasbruch, Kompost oder ähnlichen Materialien bestehen.

4.  Verfahren nach einem der vorhergehenden Ansprüche, dadurch gekennzeichnet, daß der Brennwert der Zuschlagstoffe und/oder der Kunststoffe durch die Zugabe von Wasser vermindert wird.

5.  Verfahren nach einem der vorhergehenden Ansprüche, dadurch gekennzeichnet, daß die Schüttung des Zwischenlagers in Schichten, Schüttkegeln oder Ballen erfolgt.

6.  Verfahren nach einem der vorhergehenden Ansprüche, dadurch gekennzeichnet, daß das Zwischenlager parzellenweise aufgebaut wird.

7.  Verfahren nach einem der vorhergehenden Ansprüche, dadurch gekennzeichnet, daß die Parzellen aus unterschiedlichen definierten Stoffgemischen bestehen.

8.  Verfahren nach einem der vorhergehenden Ansprüche, dadurch gekennzeichnet, daß die Parzellen des Zwischenlagers und/oder dessen bzw. deren Einzelschichten durch wärmeisolierende Zwischenlager und/oder Wände voneinander getrennt werden.

9.  Verfahren nach einem der vorhergehenden Ansprüche, dadurch gekennzeichnet, daß die Basis und/oder Oberseite des Zwischenlagers durch entsprechende Dichtungselemente vor austretendem Sickerwasser und/oder eindringendem Niederschlagswasser geschützt werden.

10. Verfahren nach einem der vorhergehenden Ansprüche, dadurch gekennzeichnet, daß die Kunststoffe vor der Lagerung aufbereitet werden, z.B. durch Zerkleinerung, Sichtung, Homogenisierung und/oder Handauslese.

11. Verfahren nach einem der vorhergehenden Ansprüche, dadurch gekennzeichnet, daß solche Zuschlagstoffe verwendet werden, die sich mechanisch leicht abtrennen lassen und/oder die für sich selbst ein vermarktungsfähiges Material darstellen wie z.B. bestimmte Gesteinsmehle oder Kompost.

12. Verfahren nach einem der vorhergehenden Ansprüche, dadurch gekennzeichnet, daß die Kunststoffabfälle nach Beendigung der Zwischenlagerzeit durch geeignete Trennverfahren wie Sieben, Sichten, Waschen oder sonstige Trennstufen wieder separiert werden.

13. Verfahren nach einem der vorhergehenden Ansprüche, dadurch gekennzeichnet, daß ein oder mehrere Kunststoffballen bzw. Ballen aus Kunststoff-Zuschlagstoff- Mischungen zur Ablagerung mit feuerhemmenden Folien, Vliesen oder Geweben ummantelt werden.

14. Verfahren nach einem der vorhergehenden Ansprüche, dadurch gekennzeichnet, daß Kunststoff und feuerhemmende Schichten im Wechsel zueinander derart aufgebaut werden, daß zur Trennung voneinander Geotextilien, Folien, Vliese oder Gewebe verwendet werden.

15. Zwischenlager für Kunststoffabfälle, dadurch gekennzeichnet, daß das Zwischenlager nach einem Verfahren nach einem der vorhergehenden Ansprüche hergestellt wird.